# EUROPÄISCHE PATENTSCHRIFT

(11) **EP 1 249 699 B1**
(45) Veröffentlichungstag und Bekanntmachung des Hinweises auf die Patenterteilung: **07.01.2009**
(21) Anmeldenummer: 02005963.0
(22) Anmeldetag: 15.03.2002
(51) Int. Cl.: G01N 27/414

(54) **Sensor zum Messen einer Gaskonzentration oder Ionenkonzentration**
Sensor for measuring a gaseous concentration or an ionic concentration
Capteur pour mesurer une concentration gaseuse ou une concentration ionique

(30) Priorität: 12.04.2001 DE 10118367
(43) Veröffentlichungstag der Anmeldung: 16.10.2002
(73) Patentinhaber: Micronas GmbH, 79108 Freiburg i. Br. (DE)
(72) Erfinder: Frerichs, Heinz Peter, Dr., 79271 St. Peter (DE)
(74) Vertreter: Patentanwälte Westphal, Mussgnug & Partner

(56) Entgegenhaltungen:
- EP-A- 0 947 829
- DE-A- 4 239 319
- DE-A- 4 333 875

## Beschreibung

Die Erfindung bezieht sich auf einen Sensor zum Messen einer Gaskonzentration oder Ionenkonzentration gemäß dem Oberbegriff von Anspruch 1.

Zur Messung von Gaskonzentrationen sind z.B. aus der US 4,411,741 Sensoren mit Feldeffekttransistoren bekannt, die eine als Gate verwendete gassensitive Schicht aufweisen, deren Austrittsarbeit abhängig ist von einer umgebenden Gaskonzentration.

Weiterhin werden zur Messung von Ionenkonzentrationen unter anderem Sensoren mit Feldeffekttransistoren verwendet, die eine als Gate verwendete ionensensitive Schicht aufweisen, deren Potential abhängig ist von der Ionenkonzentration einer umgebenden Flüssigkeit oder eines umgebenden Gases. Die US 5,911,873 zeigt einen derartigen ionensensitiven FET (ISFET).

Derartige Sensoren werden im allgemeinen erzeugt, indem in einem Halbleitersubstrat durch Gegendotierung jeweils eine Drain und eine Source erzeugt werden und eine isolierende Schicht auf dem Substrat zwischen der Source und der Drain gewachsen oder deponiert wird. Eine ionensensitive Schicht kann direkt auf diese isolierende Schicht aufgebracht werden. Eine gassensitive Schicht kann in einem bestimmten Abstand angebracht werden, was als suspended Gate FET (SGFET) bezeichnet wird. Alternativ hierzu kann ein Gate auf dem Isolator aufgebracht werden, das kapazitiv durch ein in einem bestimmten Abstand angebrachtes gassensitives Gate gesteuert wird. Ein derartiger als capacitive controlled FET (CCFET) bezeichneter Sensor ist z.B. in der DE 43 33 875 C2 beschrieben.

Ein Nachteil dieser Anordnungen ist, dass wegen einer immer vorhandenen Oberflächenleitfähigkeit das Potential über dem FET nach einer gewissen Zeit auf das Potential, welches an dem gassensitiven Gate anliegt, gezogen wird, was zu einer Drift des Drain-Source Stromes führt. Um dies zu verhindern wird herkömmlicherweise um den FET ein leitfähiger Ring gelegt, der auch Guardring genannt wird und auf ein definiertes Potential gelegt werden kann. Bei einer derartigen Anordnung nimmt der Kanalbereich des FET aufgrund der Oberflächenleitfähigkeit des Bereiches zwischen Guardring und Kanalbereich nach einer gewissen Zeit das Potential des Guardringes an. Der Abstand des Guardringes von dem Kanalbereich des FET und die Leitfähigkeit der Oberfläche definieren die Zeit, bis der Kanalbereich das Guardring-Potential annimmt, wodurch die minimal mögliche Konzentrationsänderung pro Zeit festgelegt wird, die ein zu detektierendes Gassignal haben darf, um registriert zu werden. Dieser Abstand bestimmt die Größe und damit auch die Herstellungskosten eines derartigen Sensors.

Der Erfindung liegt die Aufgabe zugrunde, einen Sensor zu schaffen, der kostengünstig und mit kleinem Bauraum herstellbar ist und dennoch eine hohe Messgenauigkeit für die zeitliche Konzentrationsänderung gewährleistet.

Diese Aufgabe wird durch einen Sensor nach Anspruch 1 gelöst. Die Unteransprüche beschreiben bevorzugte Weiterbildungen.

Erfindungsgemäß wird somit auf überraschend einfache Weise die Weglänge zwischen Guardring und FET vergrößert, ohne dass hierzu eine größer dimensionierte Schaltung notwendig ist. Der Erfindung liegt hierbei die Erkenntnis zugrunde, dass der Strompfad durch eine Oberflächenprofilierung in hohem Maß verlängert werden kann und somit die RC-Zeit, die ein Angleichen des FET-Potentials an das Potential des Guardrings definiert, vergrößert wird, ohne dass die Funktionsfähigkeit der Sensoranordnung durch diese Oberflächenprofilierung beeinträchtigt wird.

Die Oberflächenprofilierung kann hierbei erfindungsgemäß auf einfache Weise ausgebildet werden, indem auf eine zuvor erzeugte Dickoxidschicht zusätzlich zueinander beabstandete Erhöhungen ausgebildet werden. Die Ausbildung auch größerer Erhöhungen ist dabei in dem Luftspalt zwischen der sensitiven Gateschicht und der Dünnoxidschicht über dem Kanalbereich in der Regel unproblematisch.

Die Erfindung wird im folgenden anhand der beiliegenden Zeichnungen an einigen Ausführungsformen näher erläutert. Es zeigen:
Fig. 1 eine Draufsicht auf einen Sensor gemäß einer Ausführungsform der Erfindung;
Fig. 2 einen Schnitt entlang der Linie A-A' von Figur 1;

Ein Gassensor weist auf einem Substrat 11 eines ersten Ladungsträgertyps, z.B. aus n-dotiertem Silizium, eine Source 2 und eine Drain 3 eines zweiten Ladungsträgertyps, z.B. aus p-dotiertem Silizium auf, die z.B. durch Ionenimplantation ausgebildet sind.

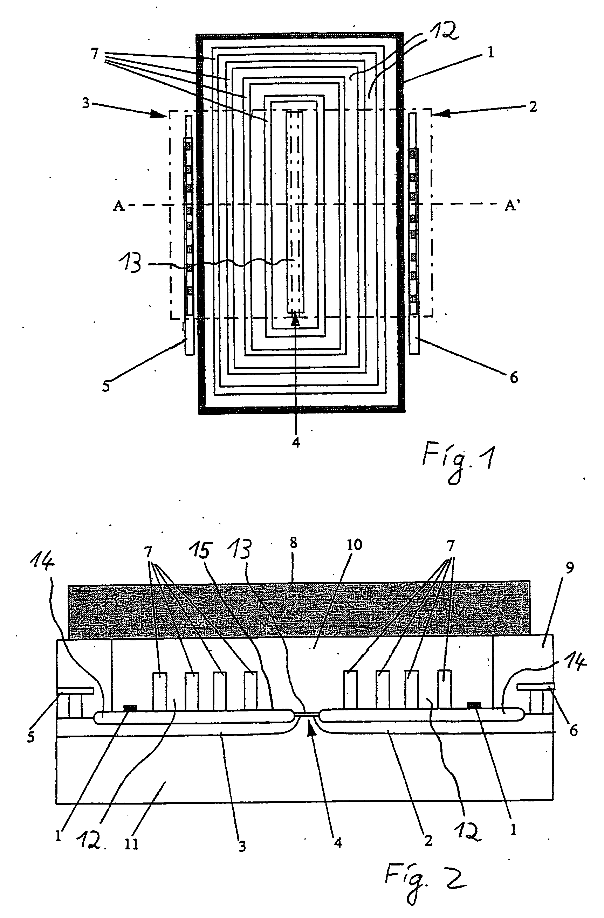

Die Source 2 ist mit einem Sourceanschluss 6, die Drain 3 mit einem Drainanschluss 5 versehen. Zwischen Source 2 und Drain 3 ist in dem Substrat ein Kanalbereich 4 vorgesehen, auf dem eine Dünnoxidschicht 13 ausgebildet ist. Auf der Source 2 und der Drain 3 sind Isolatorschichten, z.B. Dickoxidschichten 14 ausgebildet, auf deren Oberfläche 15 ein Guardring aus einem leitfähigen Material aufgebracht ist, der gemäß der Draufsicht von Figur 1 um den Kanalbereich 4 herum verläuft und auf ein definiertes Potential gelegt werden kann.

Auf seitlichen Isolatorbereichen 9 ist eine gasssensitive Gateschicht 8 angeordnet, deren Potential von einer umgebenden Gaskonzentration abhängig ist. Zwischen der Gateschicht 8 und der Dünnoxidschicht 13 ist ein Luftspalt 10 ausgebildet. Die Dünnoxidschicht 13 wirkt zusammen mit dem Luftspalt als Gatedielektrikum. Änderungen der Gaskonzentration können somit als Änderungen des Source-Drain-Stromes nachgewiesen werden.

Erfindungsgemäß ist zwischen der Dünnoxidschicht 13 oberhalb des Kanalbereiches 4 und dem Guardring 1 eine Oberflächenprofilierung vorgesehen, die Erhöhungen 7 und dazwischen ausgebildete Vertiefungen 12 aufweist. Die Profilierung der Oberfläche 15 kann insbesondere ausgebildet werden, indem durch entsprechende Depositionsschritte auf der Dickoxidschicht 14 Schichten aufgetragen werden und anschließend in mit Photomasken definierten Ätzschritten die Vertiefungen freigelegt werden.

Ergänzend wird hier darauf verwiesen, dass die Dünnoxidschicht 13 auch als Kapazität realisiert sein kann.

### Bezugszeichenliste

- 1.: Guardring
- 2.: Source
- 3.: Drain
- 4.: Kanalbereich
- 5.: Drainanschluss
- 6.: Sourceanschluss
- 7.: Erhöhungen
- 8.: Gassensitives Gate
- 9.: Isolationsschicht
- 10.: Luftspalt
- 11.: Substrat
- 12.: Vertiefungen
- 13.: Dünnoxidschicht
- 14.: Dickoxidschicht
- 15.: Oberfläche

## Patentansprüche

1. Sensor zum Messen einer Gaskonzentration oder Ionenkonzentration, der aufweist:
ein Substrat (11) eines ersten Ladungsträgertyps,
eine auf dem Substrat ausgebildete Drain (3) eines zweiten Ladungsträgertyps,
eine auf dem Substrat ausgebildete Source (2) des zweiten Ladungsträgertyps,
einen Kanalbereich (4) des Substrats, der zwischen Drain (3) und Source (2) angeordnet ist,
einen leitfähigen Guardring (1), der außerhalb des Kanalbereichs angeordnet ist,
eine sensitive Gateschicht (8), deren Potential von einer umgebenden Gaskonzentration oder Ionenkonzentration abhängig ist, wobei zwischen der Gateschicht und dem Kanalbereich (4) ein Luftspalt (10) vorgesehen ist,
eine Oberflächenprofilierung (7,12), die zwischen dem Guardring (1) und dem Kanalbereich (4) ausgebildet ist, **dadurch gekennzeichnet, dass** die Oberflächenprofilierung Erhöhungen (7) und Vertiefungen (12) aufweist, wobei auf einer Oberfläche (15) zwischen einer isolierenden Dünnschicht (13) auf dem Kanalbereich und dem Guardring (1) durch Deposition die Erhöhungen (7) aufgetragen sind, zwischen denen die Vertiefungen (12) ausgebildet sind.

2. Sensor nach Anspruch 1, **dadurch gekennzeichnet, dass** die Erhöhungen (7) als isolierendes Material auf einer oder mehreren Isolatorschichten, vorzugsweise Dickoxidschichten (14), aufgetragen sind.

3. Sensor nach einem der Ansprüche 1 oder 2, **dadurch gekennzeichnet, dass** die Erhöhungen (7) im wesentlichen konzentrisch zwischen Kanalbereich (4) und Guardring (1) ausgebildet sind.

4. Sensor nach einem der Ansprüche 1 bis 3, **dadurch gekennzeichnet, dass** die Erhöhungen gleichmäßig beabstandet sind.

5. Sensor nach einem der vorherigen Ansprüche, **dadurch gekennzeichnet, dass** die sensitive Gateschicht eine gassensitive Gateschicht (8) ist.

## Claims

1. A sensor for measuring a gas concentration or an ion concentration, comprising:
a substrate (11) of a first charge carrier type;
a drain (3) of a second charge carrier type formed on the substrate,
a source (2) of the second charge carrier type formed on the substrate,
a channel region (4) of the substrate, which is disposed between the drain (3) and the source (2),
a conductive guard ring (1), which is disposed outside the channel region,
a sensitive gate layer (8), the potential of which is dependent upon an ambient gas concentration, with an air gap (10) being provided between the gate layer and the channel region (4),
a surface profiling (7, 12), which is formed between the guard ring (1) and the channel region (4)
**characterised in that** the surface profiling comprises elevations (7) and depressions (12), with the elevations (7), between which the depressions (12) are formed, being applied by deposition to a surface (15) between an insulating thin film (13) on the channel region and the guard ring (1).

2. A sensor according to claim 1,
**characterised in that** the elevations (7) are applied as insulating material to one or more insulation layers, preferably thick oxide films (14).

3. A sensor according to one of claims 1 or 2,
**characterised in that** the elevations (7) are formed substantially concentrically between the channel region (4) and the guard ring (1).

4. A sensor according to one of claims 1 to 3,
**characterised in that** the elevations are uniformly spaced.

5. A sensor according to one of the preceding claims,
**characterised in that** the sensitive gate layer is a gas-sensitive gate layer (8).

## Revendications

1. Capteur pour mesurer une concentration de gaz ou une concentration en ions, comprenant :
- un substrat (11) d'un premier type de porteurs de charges,
- un drain (3) d'un second type de porteurs de charges réalisé sur le substrat,
- une source (2) d'un second type de porteurs de charges réalisé sur le substrat,
- une zone de canal (4) du substrat entre le drain (3) et la source (2),
- un anneau de garde (1), conducteur, situé à l'extérieur de la zone de canal,
- une couche de porte (8) sensible dont le potentiel dépend de la concentration environnantes en gaz ou de la concentration en ions,
- un intervalle d'air (10) étant prévu entre la couche de porte et la zone de canal (4),
- un profil de la surface supérieure (7, 12) entre l'anneau de garde et la zone de canal (4),
**caractérisé en ce que**
le profil de la surface supérieure comporte des bossages (7) et des cavités (12), et
sur la surface supérieure (15) entre une couche mince isolante (13) sur la zone de canal et l'anneau de garde (1) on a des bossages (7) réalisés par dépôt entre les cavités (12).

2. Capteur selon la revendication 1,
**caractérisé en ce que**
les bossages (7) sont en matière isolante appliquée sur une ou plusieurs couches d'isolation, de préférence des couches épaisses d'oxyde (14).

3. Capteur selon la revendication 1 ou 2,
**caractérisé en ce que**
les bossages (7) sont réalisés de manière pratiquement concentrique entre la zone de canal (4) et l'anneau de garde (1).

4. Capteur selon les revendications 1 à 3,
**caractérisé en ce que**
les bossages sont écartés régulièrement.

5. Capteur selon les revendications précédentes,
**caractérisé en ce que**
la couche de porte, sensible, est une couche de porte (8) sensible aux gaz.
